# EUROPEAN PATENT SPECIFICATION

(11) **EP 0 319 155 B1**
(45) Date of publication and mention of the grant of the patent: **16.02.1994**
(21) Application number: 88310738.5
(22) Date of filing: 14.11.1988
(51) Int. Cl.: C09J 7/02, C09J 133/08

(54) **High integrity composites**
Zusammengesetzte Materialien von hoher Beständigkeit
Matériaux composites à haute résistance mécanique

(30) Priority: 01.12.1987 US 124458
(43) Date of publication of application: 07.06.1989
(73) Proprietor: MINNESOTA MINING AND MANUFACTURING COMPANY, St. Paul, Minnesota 55133-3427 (US)
(72) Inventor: Reeves, Mark E. c/o Minnesota Mining and, P.O.33427 St. Paul Minnesota 55133-3427 (US); Vesley, George F. c/o Minnesota Mining and, P.O.33427 St. Paul Minnesota 55133-3427 (US); Zimmerman, Patrick G. c/o Minesota Mining and, St. Paul, Minnesota 55133-3427 (US)
(74) Representative: Baillie, Iain Cameron

(56) References cited:
- EP-A- 0 133 238
- US-A- 4 415 615

## Description

The present invention relates to high integrity composites exhibiting high impact and abrasion resistance and to the use of such composites to provide protection against impact and abrasion damage.

Abrasion-resistant films, or tapes are widely used in various applications to protect items such as automotive underbodies, aircraft panels and other painted areas likely to be frequently exposed to flying rocks and gravel. Such a product typically consists of a polyurethane film or crosslinked polyethylene film and a thin adhesive layer. Other films are available as coatings, and are rolled or sprayed directly onto the substrate. These products generally require application prior to painting of the item, and therefore are not useful for refitting.

Further, these products have not always performed satisfactorily, especially when they are subjected to low temperatures. When exposed to an impact resistance test, a standard automotive industry test designed to simulate extended exposure of a painted or coated surface to flying gravel (typically conducted at -30°C), many of the products on the market exhibit numerous cracks, chips and cuts. This is especially true of products consisting solely of a single layer of film. Although many of these products perform well under more moderate testing conditions, extended testing or testing under severe temperatures, e.g., -30°C, will cause cracking and chipping in most of the current products. Attempts to improve the products by forming foamed tapes typically have resulted in products which continue to exhibit some cracking along with unsightly indentations or deformations in the foam when tested at the lower temperatures.

U.S. Patent No. 4,254,168, (Monson), discloses a pigmented polyurethane protection film coating which must be applied prior to painting or finishing of the substrate.

U.S. Patent 3,875,090. (Levy) discloses a high impact coating composition comprising a mixture of a partially hydrolyzed vinyl chloride-vinyl acetate copolymer, an alkyd and an isocyanate. This composition must be cured after application. Frequently, these coatings do not adhere well to conventional automotive surfaces. This results in failure by peeling, cracking, checkering or the like.

Chip and abrasion resistant polyurethane coating compositions having improved adhesion are disclosed in U.S. Patent 4,735,985, (Oien). These compositions include solvent-soluble polyurethane, an adhesion-promoting amount of vinyl chloride-vinyl ester copolymer, and a solvent for the polyurethane and the copolymer. The coating is clear, and may be applied by conventional coating methods as a topcoating or an undercoating.

Pressure-sensitive adhesive tapes are disclosed in US 4,415,615, (Esmay et al.) wherein an adhesive layer is made by frothing an acrylate monomer mixture composition which is photopolymerizable to a pressure-sensitive adhesive state and coating that froth onto a polyethylene or polyethylene terephthalate film backing, and photopolymerizing to a pressure-sensitive adhesive having a cellular structure. The cellular adhesive layer of the Esmay tape comprises at least 15% voids by volume, and recovers substantially its original thickness after compression.

U.S. Patent No. 3,565,247 (Brochman) concerns a pressure-sensitive adhesive tape, the adhesive layer of which is a foam. To make such a tape, a blowing agent and a nucleating-reinforcing agent such as fumed silica are blended into a solution of a pressure-sensitive adhesive. After this blend is coated, it is heated to evaporate the solvent. The temperature is then increased to that necessary to decompose the blowing agent, causing it to release a gas which forms minute microcells throughout the dried pressure-sensitive adhesive layer.

U.S. Patent No. 4,574,697 (Feeley) discloses a sheet material for mounting flexible printing plates to the drum of a printing press including a base film, a flexible foam uniformly coated on the base film, and a pressure sensitive adhesive coated on both the base film and the foam. The cohesion of the base film and the foam, the adhesion of the base film to the foam and the adhesion of the adhesive to the base film and the foam are greater than the adhesion of the adhesive to the flexible plate. When the sheet material is removed from the printing plate,the drum, the foam, the base film, and the adhesive remain an integral sheet. Preferred foams are polyurethane, preferred films are polyethylene terephthalate. The pressure-sensitive adhesives disclosed are rubber based adhesives, specifically those including a phenolic resin.

EP-A-133,238 discloses a laminate for the protection of motor vehicle bodies from abrasion, comprising an acrylate pressure-sensitive adhesive layer (which is however not foamed) on a backing comprising a vinyl chloride copolymer resin.

There is a real need for a product which can more successfully resist impact and abrasion damage for use in those applications having high exposure to impacts and abrasion-causing contact, i.e. rocker panels in automobiles, various heavy machinery and aircraft applications such as the frontal wing. It has now been discovered that by creating a composite comprising certain film materials and foam membranes having certain compression characteristics, high integrity can be achieved at very low temperatures along with a significant improvement in chip and deformation resistance.

Accordingly, the invention provides a high integrity composite comprising:
(a) a foam membrane comprising an acrylic pressure-sensitive adhesive composition, and having a compression storage modulus (E') at -30°C of at least 3MPa, and a compression loss modulus (E") at -30°C of at least 5MPa over a frequency range of from about 1 x 10² Rad/sec to about 3 x 10⁴ Rad/sec, and
(b) a thermoplastic polyurethane abrasion-resistant film layer, wherein said composite has higher impact resistance than either said membrane or said film alone.

The composite shows unexpected reduction in surface damage such as chipping and cracking, as well as ultra high resistance to permanent deformation.

The foam membrane layer is preferably a cellular pressure-sensitive adhesive membrane, more preferably a frothed photopolymerizable acrylate pressure-sensitive adhesive composition. Such a membrane is preferably made by the steps of frothing a composition which is polymerizable to a pressure-sensitive adhesive state, coating the froth onto a backing, and polymerizing the coated froth to a pressure-sensitive adhesive state to provide a pressure-sensitive adhesive membrane having a cellular structure providing at least 10% voids on a volume basis. In preferred composites, the foam membrane is at least 250 micrometers thick.

The abrasion-resistant film layer of the composite is selected from thermoplastic films such as polyurethanes, e.g., polyester based polyurethanes, polyether based urethanes and ionomerically crosslinked copolymers of olefins and acrylates. Preferred films include aliphatic polyurethane films. In preferred composites, the film has a minimum thickness of 150 micrometers.

Further preferred features are defined in the dependent claims.

The following terms have these meanings when used herein.
1. The term "backing" means any substrate onto which something is coated or placed, including but not limited to release liners, and webbing.
2. The term "cup" means that size container used in the standard impact resistance test, holding 450 cc.
3. The term "composite" means any construction containing at least a foam layer having the required moduli and a thermoplastic resin film layer. The composite may contain other layers such as pressure-sensitive or heat-activatable adhesive layers, or solely the layers required by the invention.
4. The term "integrity" incorporates a dissipation of energy and a recovery from compression as well as abrasion resistance.
5. The term "abrasion-resistant" means that the surface is resistant to surface damage such as scratching, chipping, and cracking as well as being resistant to superficial changes in surface appearance such as "scuff marks".
6. The term "compression rheology" refers to the compression loss modulus and compression storage modulus of a foam membrane.
7. The term "CPSAM" means a cellular pressure-sensitive adhesive membrane, as described in U.S. Patent No. 4,415,615, Esmay, Johnson, Vesley.

All ratios, percentages, and parts used herein are by weight unless specifically stated otherwise.

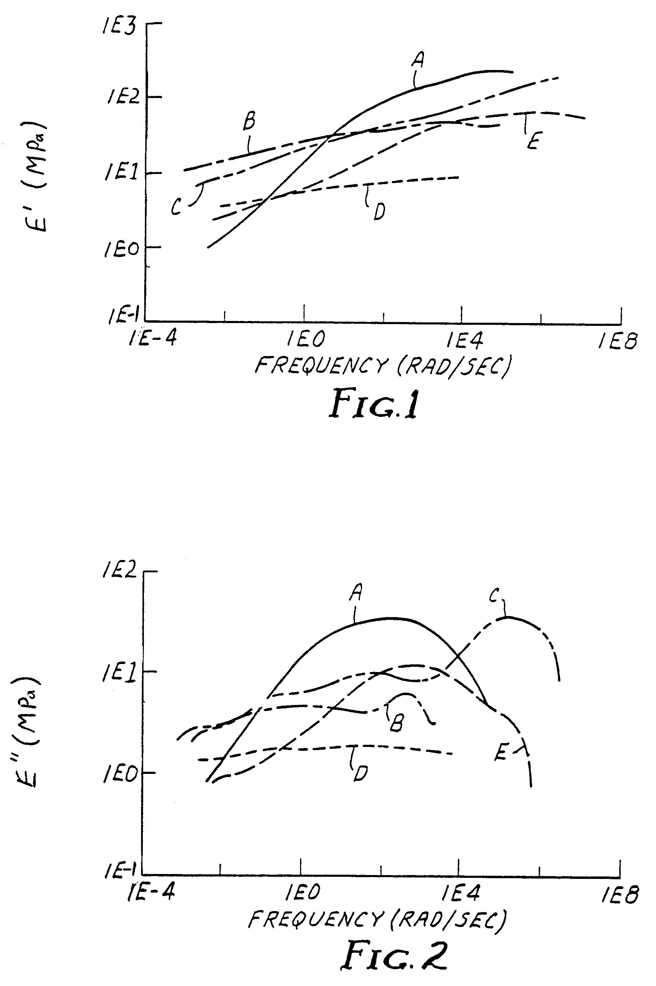

Preferred embodiments of the invention are described below by way of example only with reference to figures 1 to 6 of the accompanying drawings wherein:
FIG. 1 is a plot of the log of the compression storage modulus (E') in MPa as determined by Solids Analyzer, a type of dynamic mechanical tester available from Rheometrics™, Inc., in relation to the frequency in Radians per second (Rad/sec) for the foam membrane of Example 1 (Line A), and Example 12 (Line C), Comparative Examples C-1 (Line B), C-2 (Line D), and C-3 (Line E).
FIG. 2 is a plot of the log of the compression loss modulus (E'') in MPa as determined by Solids Analyzer, a type of dynamic mechanical tester available from Rheometrics™, Inc., in relation to the frequency in Radians per second (Rad/sec) for the foam membrane compositions in Example 1 (Line A), and Example 12 (Line C), and Comparative Examples C-1 (Line B), C-2 (Line D), and C-3 (Line E).

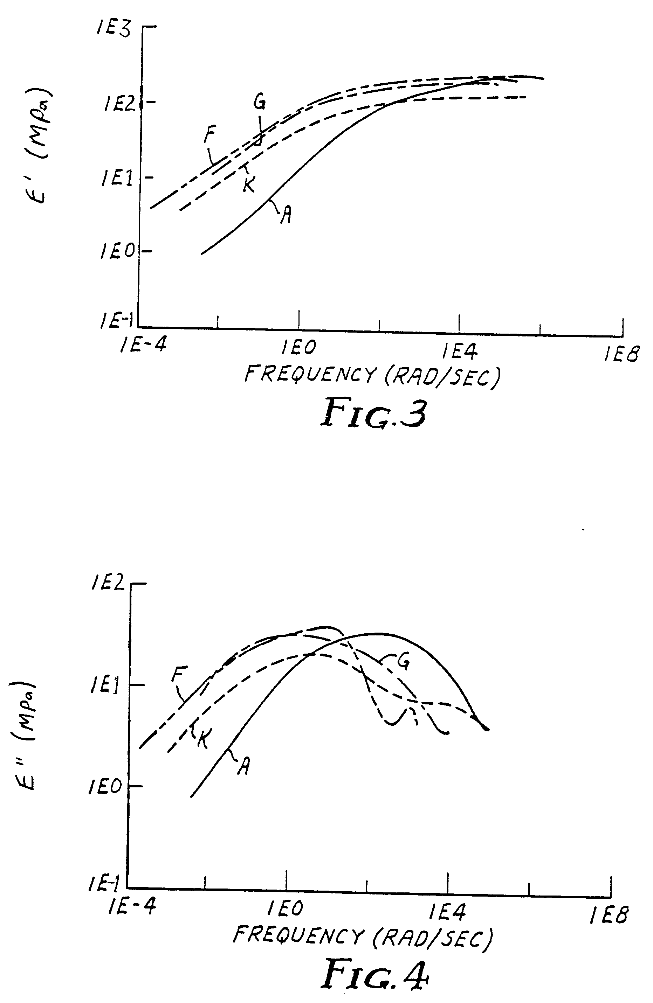

FIG. 3 is a plot of the log of the compression storage modulus (E') in MPa as determined by Solids Analyzer, a type of dynamic mechanical tester available from Rheometrics™, Inc., in relation to the frequency in Radians per second (Rad/sec) for the foam membrane compositions described in Example 1 (Line A), Example 8 (Line K) and Example 11 (Line G), and Comparative Example C-8 (Line F).

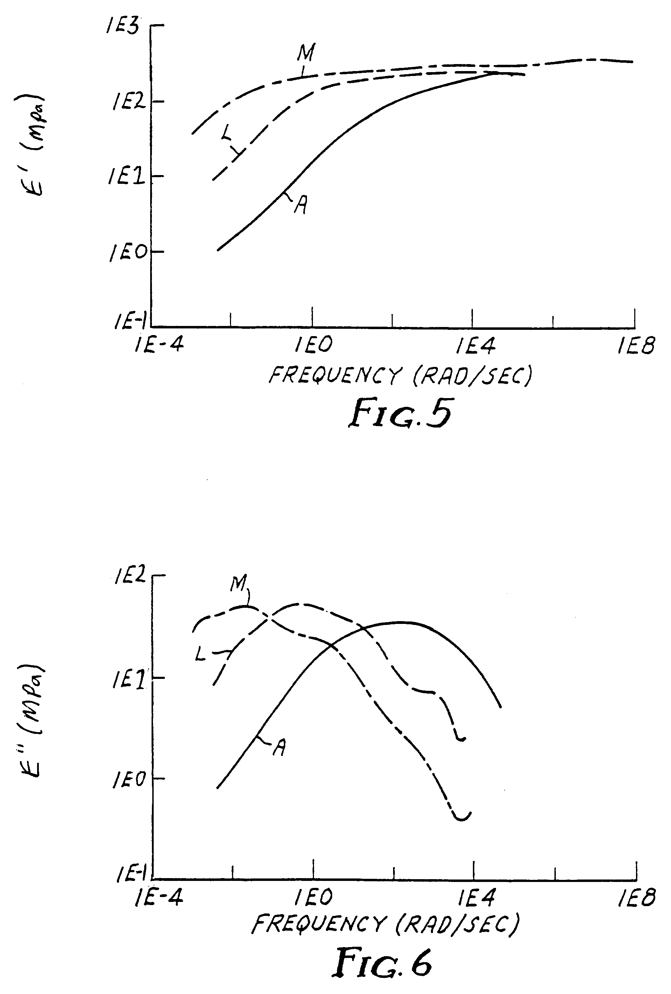

FIG. 4 is a plot of the log of the compression loss modulus (E'') in MPa as determined by Solids Analyzer, a type of dynamic mechanical tester available from Rheometrics™, Inc., in relation to the frequency in Radians per second (Rad/sec) for the foam membrane compositions in Example 1 (Line A), Example 8 (Line K) and Example 11 (Line G), and Comparative Example C-8 (Line F).
FIG. 5 is a plot of the log of the compression storage modulus (E') in MPa as determined by Solids Analyzer, a type of dynamic mechanical tester available from Rheometrics™, Inc., in relation to the frequency in Radians per second (Rad/sec) for the foam membrane compositions described in Example 1 (Line A), and Comparative Examples C-7 (Line M), and C-9 (Line L).
FIG. 6 is a plot of the log of the compression loss modulus (E'') in MPa as determined by Solids Analyzer, a type of dynamic mechanical tester available from Rheometrics™, Inc., in relation to the frequency in Radians per second (Rad/sec) for the foam membrane compositions in Examples 1 (Line A), and Comparative Examples C-7, (Line M), and C-9 (Line L).

The foam membrane layer of the composite of the invention has a compression storage modulus at -30°C of at least 3MPa (3 x 10⁷ dynes/cm²), preferably at least 30MPa (3 x 10⁸ dynes/cm²), and a compression loss modulus (E'') at -30°C of at least 5MPa (5 x 10⁷ dynes/cm²), preferably at least 10MPa (1 x 10⁸ dynes/cm²) over a frequency range of from 1 x 10² Rad/sec to 3 X 10⁴ Rad/sec.

Without wishing to be bound by theory, it is believed that the particular rheology of the foam membrane (as interpreted by dynamic mechanical testing in compression mode) effectuates a surprisingly high resistance to any disturbance of the foam's integrity, thus incorporating both a dissipation of energy and a recovery from compression. This is seen in higher resistance to surface disturbances, i.e. abrasion, and impact, in response to trauma for the composite as well as increased internal integrity. Although the preferred films exhibit some impact resistance, the foam membrane affects the impact resistance of the high integrity composite because of the excellent energy dissipation afforded by the compression rheology of the foam membranes. Novel composites of the invention show improved impact resistance over composites wherein identical films are used with forms not having the required compression rheology.

This is especially surprising when it is considered that such rheology does not appear to be determinative when evaluated in shear mode. Dynamic mechanical testing is most commonly done in shear mode, and the comparative results plotted for evaluation. When foam membranes of the invention and comparative foams are viewed in shear mode, there is no indication of the large improvement in resistance to disturbance of integrity exhibited by foams having compression rheology according to the invention. In fact, nearly the opposite is true, with comparative foams showing no significant differences in shear mode from foam membranes of the invention.

In order to be deemed useful in composites of the invention, foam membranes must exhibit the required compression rheology over the entire frequency range of from about 1 x 10² Rad/sec to about 3 x 10⁴ Rad/sec. This range includes the frequencies wherein most integrity-damaging impacts lie. However, preferred foam membranes will exhibit the required storage and loss moduli over a wider frequency range, e.g., from about 1 x 10⁻¹ Rad/sec to about 3 x 10⁴ Rad/sec.

The foam membranes useful in composites of the invention may contain various polymers, adjuvants and fillers in diverse amounts so long as the final product has the required rheology when tested via dynamic mechanical analysis in the compression mode. Preferred foam membranes for use in composites of the invention comprise membranes such as urethanes, neoprenes, and acrylic foam membranes. Especially useful urethane foam membranes are those having densities of from about 640 kg/m³ to about 1000 kg/m³ and tensile strengths of at least 1380 kPa. Preferred adjuvants include microspheres, viscosity adjusting agents, pigments, and fire retardants and are easily selected in type and amount by one skilled in the art.

Foam membranes comprising an acrylic pressure-sensitive adhesive composition require no other means for attachment of the foam to the film, and accordingly composites of the invention may be in the form of a tape.

Acrylic pressure-sensitive adhesive membranes of the composites of the invention preferably comprise a copolymer containing 50-100 parts of substituted or unsubstituted alkyl acrylate or methacrylate monomers (all of which are hereinafter collectively referred to as "acrylate monomer") and 0-50 parts of a polar copolymerizable monoethylenically-substituted monomer; the ratios being selected such that after polymerization the foam membrane will have the required compression rheology. Useful acrylate monomers are monofunctional unsaturated acrylate esters of non-tertiary alkyl alcohols, the molecules of which have from 1 to about 14 carbon atoms. Included within this class of monomers are, for example, isooctyl acrylate, isononyl acrylate, isononyl methacrylate, 2-ethyl-hexyl acrylate, decyl acrylate, dodecyl acrylate, n-butyl acrylate, and hexyl acrylate. Preferred monomers include isooctyl acrylate, isononyl acrylate, and butyl acrylate.

The polar copolymerizable monomers can be selected from strongly polar monomers such as acrylic acid, itaconic acid, hydroxyalkyl acrylates, cyanoalkyl acrylates, acrylamides or substituted acrylamides, or from moderately polar monomers such as N-vinyl pyrrolidone, N-vinyl caprolactam, acrylonitrile, and vinyl chloride.

In situ polymerization can be effected by ultraviolet radiation as taught in U.S. Patent No. 4,181,752, (Martens et al.), by thermal polymerization or by electron beam as taught in U.S. Patent No. 4,243,500 (Glennon), and U.S. Patent No. 2,956,904 (Hendricks). However, photopolymerization by ultraviolet radiation is generally preferred.

Where photopolymerization is desirable, the acrylic foam membrane of the novel composites of the invention also contains a photoinitiator to induce polymerization of the monomers. Photoinitiators that are useful for polymerizing the acrylate monomer include the benzoin ethers, substituted benzoin ethers such as benzoin methyl ether or benzoin isopropyl ether, substituted acetophenones such as 2,2-diethoxy-acetophenone, and 2,2-dimethoxy-2-phenyl-acetophenone, substituted alpha-ketols such as 2-methyl-2-hydroxypropiophenone, aromatic sulphonyl chlorides such as 2-naphthalene sulphonyl chloride, and photoactive oximes such as 1-phenyl-1,2-propanedione-2-(O-ethoxycarbonyl) oxime. Generally, the photoinitiator is present in an amount of from about 0.01 part to about 1.0 part per 100 parts monomer weight (phr).

The photopolymerizable composition preferably contains a crosslinking agent to enhance the cohesive strength of the resulting foam membrane. Useful crosslinking agents which also function as photoinitiators are the chromophore-substituted halomethyl-s-triazines disclosed in U.S. Patent Nos. 4,330,590 (Vesley) and 4,329,384 (Vesley et al.), incorporated herein by reference. Other suitable crosslinking agents include hydrogen abstracting carbonyls such as anthraquinone and benzophenone and their derivatives, as disclosed in U.S. 4,181,752 (Martens), and polyfunctional acrylates such as 1,6-hexanedioldiacrylate, trimethylolpropane triacrylate and 1,2-ethylene glycol diacrylate, as well as those disclosed in U.S. Patent No. 4,379,201, (Heilmann).

In one preferred embodiment, the foam membrane of the composite comprises an acrylic cellular pressure-sensitive adhesive membrane (hereinafter "CPSAM") as described in U.S. Patent No. 4,415,615, Esmay et al.

A CPSAM is made by the steps of
(a) frothing a composition which is polymerizable to a pressure-sensitive adhesive state,
(b) coating the froth onto a backing, and
(c) polymerizing the coated froth in situ to a pressure-sensitive adhesive state to provide a pressure-sensitive adhesive membrane having a cellular structure.

Frothing can be conveniently accomplished by whipping a gas into the polymerizable composition. After coating the frothed composition onto a backing, the polymerization may be initiated by ultraviolet radiation as taught in U.S. Patent No. 4,181,752, (Martens et al.). Where such photopolymerization is desired, an inert frothing gas is preferably used as air tends to quench photopolymerization. Carbon dioxide and nitrogen are preferred frothing gases.

The acrylate composition can also be directly coated onto the backing, and simultaneously frothed and polymerized to obtain the CPSAM.

The density of the CPSAM is preferably between 640 kg/m³ and 885 kg/m³. If the density is too low, the composite tape will be more difficult to make and will exhibit increased denting in the CPSAM layer. If the density is too high, the composite tape will not show the improved integrity at -30°C, but will chip and crack in amounts approaching conventional products.

The CPSAM has a cellular structure providing at least 10% voids, said percentage being on a volume basis. The average size of the voids is about 10 micrometers in diameter. The percentage of voids is calculated as follows:
- dᵤ=: the unfoamed density of the adhesive membrane
- d_{f}=: the foamed density of the adhesive membrane
- v=: voids in adhesive membrane 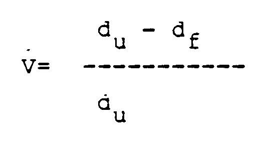
Regardless of the polymerization method, it is preferable to include a surfactant in the composition. Preferred surfactants are those such as fluorochemicals known to be useful for foaming organic materials with low surface tension. Useful surfactants include those listed in U.S. Patent No. 4,415,615, Esmay et al. When included, surfactants are most effective in amounts ranging from 0.5% to about 5% by weight of total solids.

Other materials which can be blended with the polymerizable mixture prior to coating include reinforcing agents and other modifiers, some of which may copolymerize with the polymerizable mixture or may polymerize separately. The types and amounts of these materials to be added must be selected such that the final foam membrane retains the required compression rheology.

In one type of preferred composites of the invention, the foam membrane comprises hollow microspheres. Microspheres may be included in many types of foam membranes, e.g., urethane foam, neoprene, or acrylic pressure-sensitive adhesive foams, which may or may not be cellular in nature. The amount of microspheres to be included in a foam membrane will vary with the type of foam and the amount and type of other adjuvants included in the foam e.g., a cellular pressure-sensitive adhesive membrane will have a differing storage modulus from a urethane foam and will therefore tolerate a differing amount of the microspheres while retaining a modulus within the requirements.

Where inclusion of such microspheres are desirable, i.e., in a colored or opaque composite, microspheres may be selected from glass microspheres, polymeric microspheres or a mixture thereof. Microspheres having an average diameter of 10 to 200 micrometers are commercially available and may be useful with various types of foam membranes of the invention. When used, microspheres may be blended into the foam composition in varying amounts prior to coating.

Where the foam membrane comprises an acrylic pressure-sensitive adhesive, microspheres having an average diameter of 10 to 60 micrometers are useful, preferred microspheres having average diameters from about 10 to about 40 micrometers. Selection of the type and amount of microspheres for acrylic foam membranes is dependent on such factors as type of polar copolymerizable monomer selected, and ratio of such monomer to the alkyl acrylate or methacrylate monomer.

Useful glass microspheres include those disclosed in U.S. Patent Nos. 4,223,067 (Levens), 4,666,771, (Vesley et al.), and 4,612,242 (Vesley et al.).

Useful hollow polymeric microspheres include those described in U.S. Patent Nos. 3,615,972, 4,075,138, and 4,287,308. The microspheres are available from the Pierce & Stevens Company under the trade name "Microlite" in unexpanded form and "Miralite" in expanded form. Similar microspheres are available from Kema Nord Plastics under the trade name "Expancel". In expanded form, the microspheres have a specific density of approximately 0.02-0.36 g/cc. It is possible to include the unexpanded microspheres in the pressure sensitive adhesive composition and subsequently heat them to cause expansion, but it is preferred to mix the expanded microspheres into the adhesive. This process makes it easier to ensure that the hollow microspheres in the final membrane are substantially surrounded by at least a thin layer of adhesive.

Another especially useful type of filler material is hydrophobic silica as disclosed in U.S. Patent Nos. 4,710,536 and 4,749,590, (Klingen, Zimmerman). In one preferred embodiment of the present invention, the acrylic pressure-sensitive adhesive foam layer further comprises from about 2 to about 15 phr of a hydrophobic silica having a surface area of at least 10 m²/g.

Other useful filler materials for the foam layer include fibrous reinforcement strands, woven and nonwoven fabrics, dyes, pigments and other coloring agents, and viscosity adjusting agents.

The abrasion-resistant film layer of the high integrity composites of the invention comprise a polyurethane film made of thermoplastic resin. Useful films include aromatic or aliphatic polyester based polyurethanes, and polyether based urethanes Preferred films for use include thermoplastics having Shore A hardness values using the American Society of Test Methods Test, ASTM-2240, of about 60 to about 95, most preferably from about 70 to about 95, such as aliphatic polyurethanes. In preferred composites, the film at least 150 micrometers in thickness, preferably at least 250 micrometers, most preferably at least 300 micrometers.

The most preferred films for used in the high integrity composites are aliphatic polyurethane films. The films have from 40,000-70,000 KPa stress figures using ASTM-D882, a shear strength of 0.8-3.5 kg using ASTM-1938, and and a 500% elongation at break, and thus are tough, abrasion-resistant films.

These films include various "outdoor grade" polyurethane films available from Minnesota Mining and Manufacturing Company (3M Company), films available from J.P. Stevens and Co. under the designation of "MP Series" urethanes, i.e., "MP-1880", MP-1890", "MP-1495" and the like, and those available from Wolff Walsrode under the designation "Waloplast PUR". Similar films are also commercially available from other companies, e.g., Coating Sciences, Inc.

Composites of the invention show surprising resistance to disturbance of their integrity when compared to film products alone, to conventional foamed products, or to film/foam products wherein the foams do not exhibit the required storage modulus or loss modulus. When tested under severe conditions (such as the decreased temperatures used herein, or situations having increased abrasion opportunity), composites of the invention show remarkably little chipping or cutting. Further, the composites do not show the denting that is common with conventional foamed products.

Composites of the invention may comprise more than one foam membrane laminated together, if desired. However, the final foam membrane as used must have the required compression storage and loss moduli.

Preferred composites of the invention may be made by the following typical procedure.

A mixture of photopolymerizable monomers is mixed with a photoinitiator, preferably 2,2-dimethoxy-2-phenyl acetophenone, available as "Irgacure 651" from Ciba Geigy Corporation. The monomer mixture is then exposed to ultraviolet radiation to provide a syrup of about 3000 cps in viscosity. Additional photoinitiator is then added to the syrup along with the crosslinking agent, along with any fillers or pigments, and mixed. The mixture is then deaerated, and transferred to a frother operating at 300 rpm. While nitrogen or other inert gas is fed into the frother, surfactant, if desired, is added. The frothed syrup is delivered through tubing to the desired coater, i.e., a nip roller or manifold, and coated between a pair of transparent, biaxially oriented polyethylene terephthalate films, the facing surfaces of which preferably have low-adhesion coatings.

This foam assemblage emerging from the roll coater is then irradiated with a bank of fluorescent black light bulbs. Preferred banks of lights have emissions, 90% of which are between 300 and 400 nm with a maximum at 351 nm. The preferred exposure is 600 millijoules, as measured by an EIT "UV RAD" radiometer, which is spectrally responsive between 300 nm and 400 nm, maximum at about 350 nm. The foam assemblage is cooled by blowing air against both films during the irradiation to keep the temperature of the films below 85°C. This is done to avoid wrinkling the film.

The resulting cellular adhesive membrane is then cold roll laminated to a thermoplastic film, such film may have an acrylate pressure-sensitive adhesive thereon.

Factors determinative of the uniformity, density, cell size and elongation of the cellular pressure-sensitive adhesive membrane of the resulting composite tape include the selection and amount of surfactant, the nitrogen flow rate, viscosity of the resin, the temperature and the pressure in the frother.

### Test Methods

### Dynamic Mechanical Testing

Dynamic mechanical testing provides a method for determining the storage and the loss moduli and the damping factor as a function of temperature, frequency, time or a combination thereof. A graphic plot of these factors provides a graphic representation of elasticity and damping as a function of temperature or frequency.

The Solids Analyzer made by Rheometrics™, Inc. was used. This instrument subjects the sample to small amplitude sinusoidal oscillation. Testing was done in a parallel plate geometry in the compression mode. The compression storage modulus (E′), the compression loss modulus (E˝) and the damping factor (tan δ) were measured at at series of frequencies of oscillation in the range of from 0.10 to 100 Radians/second over a temperature range of -50°C to -10°C, at intervals of 10°C.

### Impact Resistance Test

The standard impact resistance test, developed by the Society of Automotive Engineers, and denominated test J400, consists of projecting a standardized road gravel by means of a controlled air blast onto a 10.6 cm by 30.5 cm test panel. The testing apparatus, called a gravelometer, is designed to contain road gravel, a test panel holder and a gravel projecting mechanism. The gravel projecting mechanism, located in front of the test panel, consists of an air nozzle in the base of an inverted pipe tee. The stem of the pipe tee points upward and is connected to a funnel through which the gravel is poured. The pressure in the pipe is 450-550 kiloPascals (kPa). The gravel is water worn road gravel, not crushed limestone or rock, which will pass through 1.6 cm space screen when graded but be retained on 0.95 cm space screen. Gravelometer tests are run under controlled temperature conditions, and with various standard amounts of gravel. The gravel is measured in "cups", each "cup" holding 450 cc of gravel.

The high integrity composite tape is cut into 7.6 cm by 15.2 cm samples and laminated to a painted steel panel. (The paint used in all cases was a high solids melamine crosslinked acrylic automotive paint.) The laminated samples are allowed to dwell for three days at room temperature, and four hours in a cold room at -29°C prior to testing. The test is performed entirely within the environmental chamber at -29°C. The incoming hoses to the gravelometer are also chilled. The panel is placed in the gravelometer, and the indicated number of cups of gravel and projected onto the test panel. After gravel impact, the effects of the gravel on the test panel are determined by visual determination. This procedure is repeated for each panel to be tested.

### Rating Criteria

The tested panels were evaluated on the basis of three criteria: the film cuts, the foam membrane dents, and the foam membrane delaminations. The following rating system was used to grade each panel; the ratings given in the following tables are the sums of all three evaluations. Ratings of up to 120 points are possible.

A total rating of 100 based on ratings of 40 or smaller for each evaluation is acceptable. Any rating of larger than 40 for a single evaluation renders the panel unacceptable even if the total rating is 100 or smaller, e.g., a total rating of 100 based on ratings of 20, 60, and 20 would be unacceptable. Preferred composites of the invention have total ratings of 60 or smaller based on ratings of 20 or smaller for each evaluation.

| RATING DELAMINATION | FILM | CUTS/ 6.25 CM² | DENTS/6.25 CM² |
|---|---|---|---|
| 0 | NONE | NONE | NONE |
| 10 | 1-5 CUTS-0.16 CM OR LESS | 4-8 dents/ | 1-5% |
| 20 | 5-10 CUTS-0.32 CM OR LESS | 8-12 dents/ | 6-10% |
| 30 | 10-20 CUTS-0.32 CM OR LESS | 12-16 dents/ | 11-25% |
| 40 | >20 CUTS OR CUTS OVER 0.32 CM | 16-20 dents/ | 25-100% |

### 90° Peel

The composite tape to be tested is slit to a width of 1.27 cm and self-adhered to a 5.1 cm x 15.2 cm painted steel panel. The composite tape is compressed under the weight of a 5.58 kg hard-rubber-covered steel roller, 1 pass in each direction. After dwelling at 23°C for 72 hours, the "90° Peel" is measured by moving the free end of the composite tape away from the painted panel at a rate of about 0.5 cm/second using a tensile tester.

The following examples are for illustrative purposes only, and should not be construed as limiting the invention. The scope of the invention is that defined in the claims only.

### EXAMPLES

### Examples 1-4

A syrup of coatable viscosity was prepared by partially polymerizing a mixture of 90 parts isooctyl acrylate, 10 parts acrylic acid, and 0.04 part of a photoinitiator, 2,2-dimethyl-2-phenyl acetophenone (available as Irgacure™ 651 from Ciba Geigy Corporation, and as "KB-1" from Sartomer™ Company), as taught in U.S. Patent No. 4,330,590 (Vesley). To each aliquot of this syrup was added an additional 0.1 part of the same photoinitiator, and 0.05 part of hexanedioldiacrylate and 6 parts of hydrophobic silica (Degussa "Aerosil" R972), and 0.2 part of a pigment mixture, comprising 18% carbon in 2-phenoxyethyl acrylate purchased from Penn Color. Each of the resulting mixtures was thoroughly mixed slowly with an air stirrer and carefully degassed in a desiccator using a vacuum pump.

The mixtures were employed to provide a cellular pressure-sensitive adhesive membrane as described in U.S. 4,415,615 (Esmay et al.) Typical tape making procedure, column 6, line 31. A 2:1 ratio of surfactants C and D, also described in Esmay et al., were used to froth the syrup and were added in-line to the acrylic mixture just prior to the frother.

Each frothed mixture was fed into the nip of a knife coater between a pair of transparent, biaxially-oriented poly(ethylene terephthalate) films, the facing surfaces of which had low adhesion coatings. The knife coater was adjusted to provide a coating thickness of approximately 0.77 mm to 0.25 mm. The foam assemblage emerging from the knife coater was irradiated with a bank of fluorescent lamps, 90% of the emissions of which were between 300 and 400 nm with a maximum of 351 nm. The exposure was measured by an EIT "UV RAD" Radiometer which is spectrally responsive between 300 and 400 nm, with a maximum sensitivity at 350 nm. Each side of the coating was exposed to a total radiation of 600 millijoules. This total does not include the irradiation adsorbed by the poly(ethylene terephthalate) films. The foam assemblage was cooled by blowing air against both films during the irradiation to keep the temperature of the film below 85°C in order to avoid wrinkling of the films. The resulting black cellular adhesive membranes were cold roll laminated to 0.3 mm thick polyurethane films having 25 micrometers of an acrylate pressure-sensitive adhesive thereon, and denominated composite tapes 1-4 in Table I.

The foam membrane of composite tape 1 was also tested to determine the compression storage and loss moduli and the results are plotted in Figures 1-6. The compression rheology of foam membrane layers of composite tapes of the invention can be see from these figures.

### Examples 5-7

Composite tapes 5-7 were prepared by a process similar to that in Example 1 except that the coatable syrup was made using 95 parts of isooctyl acrylate and 5 parts acrylic acid, and no pigment was included.

### Example 8

Composite tape 8 was prepared by adding 1.5 parts of hollow polymeric microspheres having an average diameter of 50 micrometers, available as Expancel 551DE, to a 90:10 coatable syrup prepared as described in Example 1, paragraph 1. Syrup was coated and polymerized without frothing as described in Example 1, and no pigment was included.

The foam membrane layer of the composite tape was also tested to determine the compression storage and loss moduli and the results are plotted in Figures 3 and 4 as Line K where the required compression rheology can clearly be seen over the entire range of frequencies.

### Example 9

Composite tape 9 was prepared by a process similar to that in Example 1 except that the polyurethane film was substituted for the bottom transparent film and therefore, the frothed mixture was coated directly onto the polyurethane film to a thickness of 0.64 mm. No pigment was included. The film composite had a 90° peel value of 85 N/dm.

### Example 10

Composite tape 10 was prepared by a process similar to that in Example 1 except that the polyurethane film cold rolled laminated to the CPSAM had a thickness of 0.15 mm.

### Example 11

Composite tape 11 was prepared by a process similar to that in Example 8 except that Expancel™ 551-DE-20 microspheres were substituted for the Expancel™ 551DE. These microspheres have an average diameter of 20 micrometers.

The foam membrane layer of the composite tape was tested to determine the compression storage and loss moduli and the results are plotted in Figures 3 and 4 as line G where the required compression rheology can clearly be seen over the entire range of frequencies.

### Example 12

Composite tape 12 was made by cold roll laminating a 0.3 mm thick polyurethane film having 50 micrometers of an acrylate pressure-sensitive adhesive thereon having one side coated with a acrylate adhesive of the type disclosed in U.S. Patent No. Re 24,906, (Ulrich) to a "Norwood 8031" polyurethane foam.

The foam membrane layer of the composite tape was tested to determine the compression storage and loss moduli and the results are plotted in Figures 1 and 2 as line D where the required compression rheology can clearly be seen over the entire range of frequencies.

**TABLE I**

| TAPE | FOAM DENSITY kg/m³ | FOAM THICKNESS mm | RATING 25CUPS | RATING 100 CUPS | RATING 45 DEG 25 CUPS |
|---|---|---|---|---|---|
| 1 | 769 | 0.75 | 0 | 0 | 20 |
| 2 | 721 | 0.81 | 0 | 0 | 0 |
| 3 | 913 | 0.51 | 30 | - | 0 |
| 4 | 748 | 0.51 | 0 | - | 0 |
| 5 | 817 | 0.75 | 0 | 0 | 0 |
| 6 | 769 | 0 5 | 0 | 30 | 10 |
| 7 | 705 | 0.25 | 0 | - | 40 |
| 8 | 785 | 0.80 | 0 | 20 | 0 |
| 9 | 817 | 0.64 | 0 | 0 | 0 |
| 10 | 769 | 0.75 | 20 | - | 0 |
| 12 | 801 | 0.86 | 20 | 30 | 40 |

### Comparative Examples C-1 to C-9

Comparative examples C-1 to C-4 were made by cold roll laminating a polyurethane film of 0.3 mm thickness having one side coated with a acrylate adhesive of the type disclosed in U.S. patent No. Re 24,906, (Ulrich) to various foams. The polyethylene foam used in example C-1 is a "Lohmann 950" high density polyethylene foam. The urethane foam used in C-2 is a closed cell polyurethane foam available from 3M Company as "4032". In tape C-3, a polychloroprene neoprene foam tape was used.

The foam layers of the comparative tapes were also tested to determine the compression storage and loss moduli and the results are plotted in Figures 1 and 2. It can clearly be seen that the foams used in the comparative tapes do not show the required compression rheology over the full spectrum of frequencies.

Comparative example C-4 was prepared similar to example 8 except 1.6 parts Expancel 551-DE hollow polymeric microspheres were added to coatable syrup before degassing and the monomer ratio was 87.5/12.5.

Comparative example C-5 was polyurethane film of 300 micrometers alone. It should be noted that the highest possible rating for C-5 and any other comparative examples consisting of films alone will be 80 points rather than 100 points as no foam dents are possible. Such ratings will be indicated by the presence of an asterisk (*).

Comparative example C-6 was made by cold roll laminating a polyurethane film of 0.15 mm thickness having one side coated with a acrylate adhesive of the type disclosed in U.S. Patent No. Re 24,906 (Ulrich).

Comparative example C-7 was prepared similar to Example C-4 except that 8 parts glass microbubbles having an average diameter of 50 micrometers were substituted for the polymeric microspheres.

The foam layer of the comparative tape was also tested to determine the compression storage and loss moduli and the results are plotted in Figures 5 and 6 as Line L. It can clearly be seen that the comparative tape does not show the required compression rheology over the full spectrum of frequencies, especially when the loss modulus (Figure 6) is viewed. The loss modulus falls off dramatically before the upper end of the required frequency range is reached.

Comparative example C-8 was prepared similar to Example C-4 except that the polymeric microspheres used are commercially available from Matsumoto Company under the name F-80-ED. The average diameter of such microspheres is 80 micrometers.

The foam layer of the comparative tape was also tested to determine the compression storage and loss moduli and the results are plotted in Figures 3 and 4 as Line F. It can clearly be seen that the comparative foam does not show the required compression rheology over the full spectrum of frequencies, especially when the loss modulus (Figure 4) is viewed.

Example C-9 was prepared similar to Example 8 except that 10 volume percent glass bubbles having an average diameter of about 50 micrometers were used in place of the Expancel 551-DE polymeric microspheres.

The foam layer of the comparative tape was also tested to determine the compression storage and loss moduli and the results are plotted in Figures 5 and 6 as Line M. It can clearly be seen that the comparative foam does not show the required compression rheology over the full spectrum of frequencies, especially when the loss modulus is viewed. The loss modulus (Figure 6) falls to below the required minimum before the upper end of the required frequency range is reached.

**TABLE II**

| TAPE | FOAM | FOAM DENSITY KG/M3 | FOAM THICKNESS MM | RATING 25 CUPS | RATING 100 CUPS | RATING 45 DEG 25 CUP |
|---|---|---|---|---|---|---|
| C-1 | POLYETH | 80 | 0.91 | 120 | - | - |
| C-2 | URETHANE | 230 | 0.84 | 20 | 80 | 40 |
| C-3 | NEOPRENE | 800 | 0.79 | 20 | 70 | 60 |
| C-4 | HPMS¹ | 817 | 0.75 | 40 | 40 | - |
| C-5 | NONE | | | 80 | - | - |
| C-6 | NONE | | | 80 | - | - |
| C-7 | HGMS² | 720 | 0.75 | 40 | 80 | 50 |
| C-8 | HPMS¹ | 753 | 0.79 | 0 | 80 | 0 |

| | | | | | | |
|---|---|---|---|---|---|---|
| ¹ hollow polymeric microspheres | | | | | | |
| ² hollow glass microbubbles | | | | | | |

As can be seen from the above data, conventional products do not perform as well in impact resistance testing as do composite tapes of the invention. All of the comparative constructions have at least one rating which is unacceptable or an unacceptable total; many are unacceptable in all categories.

## Claims

1. A high integrity composite comprising:
(a) a foam membrane comprising an acrylic pressure-sensitive adhesive composition, and having a compression storage modulus (E') at -30°C of at least 3MPa, and a compression loss modulus (E'') at -30°C of at least 5MPa over a frequency range of from about 1 x 10² Rad/sec to about 3 x 10⁴ Rad/sec, and
(b) a thermoplastic polyurethane abrasion-resistant film layer, wherein said composite has higher impact resistance than either said membrane or said film alone.

2. A high integrity composite according to claim 1 wherein said thermoplastic polyurethane abrasion-resistant film layer has a Shore A hardness of 60 to 95. said film layer being at least 150 micrometers thick.

3. A high integrity composite according to claim 1 or claim 2 wherein said foam membrane has a compression storage modulus (E') at -30°C of at least about 30 MPa and a compression loss modulus (E'') at -30°C of at least 10 MPa over a frequency range of from about 1 x 10⁻¹ Rad/sec to about 3 x 10⁴ Rad/sec.

4. A high integrity composite according to any preceding claim wherein said pressure-sensitive adhesive composition comprises
(a) a polymer of 50-100 parts of substituted or unsubstituted acrylate or methacrylate monomer and correspondingly 50-0 parts of a polar copolymerizable monomer, and
(b) a crosslinking agent.

5. A high integrity composite according to any of claims 1 to 3 wherein the acrylate pressure-sensitive adhesive composition comprises
(a) from 90 parts to 99 parts of isooctyl acrylate, and correspondingly, from 1 to 10 parts of a strongly polar copolymerizable monomer selected from the group consisting of acrylic acid, methacrylic acid, itaconic acid, acrylamide and methacrylamide, and
(b) from about 0.01 part to about 1.0 part of a crosslinking agent selected from the group consisting of hydrogen abstracting carbonyls, multifunctional acrylates, and chromophore-substituted triazines.

6. A high integrity composite according to any of claims 1 to 3 wherein said acrylate pressure-sensitive adhesive composition comprises
(a) a polymer of 70-100 parts of substituted or unsubstituted acrylate monomer and correspondingly 30-0 parts of a moderately polar copolymerizable monomer selected from the group consisting of N-vinylpyrrolidone, N-vinylcaprolactam, vinyl chloride and acrylonitrile, and
(b) from about 0.001 part to about 1 part of a crosslinking agent selected from the group consisting of benzophenone, anthraquinone, 1,6-hexanedioldiacrylate, and 2,4-bis(trichloromethyl)-6-p-methoxphenyl-s-triazine, and 2,4-bis(trichloromethyl)-6-(3,5 dimethoxyl phenyl)-s-triazine.

7. A high integrity composite according to claim 6 wherein said foam membrane has a cellular structure comprising at least 10% voids on a volume basis.

8. A high integrity composite according to any preceding claim wherein said polyurethane film is at least 250 micrometers thick.

9. A high integrity composite according to any preceding claim further comprising from 10% to 75% by volume microspheres selected from the group consisting of glass microspheres and hollow polymeric microspheres, and mixtures thereof.

10. A high integrity composite according to any preceding claim wherein said acrylate pressure-sensitive adhesive composition further comprises from 2 to 15 parts of a hydrophobic silica having a surface area of at least about 10 m²/g.

11. A high integrity composite according to any preceding claim further comprising flexible means for attachment of said foam membrane and said thermoplastic polyurethane abrasion-resistant film layer, wherein said means does not substantially affect energy dissipation of the composite.

12. A high integrity composite according to any preceding claim wherein said polyurethane abrasion-resistant film layer has a thickness of at least 300 micrometers.

13. Use of a high integrity composite as claimed in any preceding claim to provide protection against impact and abrasion damage.

14. An automobile rocker panel comprising a high integrity composite as claimed in any of claims 1 to 12 attached thereto.

## Patentansprüche

1. Verbundstoff mit hoher Beständigkeit, umfassend:
(a) eine Schaumstoffmembran, umfassend eine Acryl-Haft-klebstoffzusammensetzung mit einem Kompressions-Haltemodul (E') bei -30 °C von mindestens 3 MPa und einem Kompressions-Verlustmodul (E'') bei -30 °C von mindestens 5 MPa über einen Frequenzbereich von etwa 1 x 10² rad/s bis etwa 3 x 10⁴ rad/s, und
(b) eine Schicht einer abriebfesten thermoplastischen Polyurethanfolie,
bei welchem der Verbundstoff eine höhere Schlagzähigkeit hat als entweder die Membran oder die Folie allein.

2. Verbundstoff mit hoher Beständigkeit nach Anspruch 1, bei welchem die Schicht einer abriebfesten thermoplastischen Polyurethanfolie eine Shore-A-Härte von 60 bis 95 MPa hat und die Folienschicht mindestens 150 Mikrometer dick ist.

3. Verbundstoff mit hoher Beständigkeit nach Anspruch 1 oder 2, bei welchem die Schaumstoffmembran einen Kompressions-Haltemodul (E') bei -30 °C von mindestens etwa 30 MPa und einem Kompressions-Verlustmodul (E'') bei -30 °C von mindestens etwa 10 MPa über einen Frequenzbereich von etwa 1 x 10⁻¹ rad/s bis etwa 3 x 10⁴ rad/s hat.

4. Verbundstoff mit hoher Beständigkeit nach einem der vorgenannten Ansprüche, bei welchem die Haftklebstoffzusammensetzung aufweist:
(a) ein Polymer mit 50 bis 100 Teilen substituiertes oder nichtsubstituiertes Acrylat- oder Methacrylatmonomer und entsprechend 50 bis Null Teile eines polaren copolymerisierbaren Monomers, und
(b) ein Vernetzungsmittel.

5. Verbundstoff mit hoher Beständigkeit nach Anspruch 1 bis 3, bei welchem die Acrylat-Haftklebstoffzusammensetzung aufweist:
(a) von 90 Teilen bis 99 Teile Isooctylacrylat und entsprechend von 1 bis 10 Teile eines starkpolaren copolymerisierbaren Monomers, ausgewählt aus der Gruppe, bestehend aus Acrylsäure, Methacrylsäure, Itaconsäure, Acrylamid und Methacrylamid, und
(b) von etwa 0,01 Teilen bis etwa 1,0 Teile eines Vernetzungsmittels, ausgewählt aus der Gruppe, bestehend aus Wasserstoff abspaltenden Carbonylen, polyfunktionellen Acrylaten und mit Chromophor substituierten Triazinen.

6. Verbundstoff mit hoher Beständigkeit nach Anspruch 1 bis 3, bei welchem die Acrvlat-Haftklebstoffzusammensetzung aufweist:
(a) ein Polymer von 70 Teilen bis 100 Teile substituiertes oder nichtsubstituiertes Acrylatmonomer und entsprechend 30 bis Null Teile eines mäßigpolaren copolymerisierbaren Monomers, ausgewählt aus der Gruppe, bestehend aus N-Vinylpyrrolidon, N-Vinylcaprolactam, Vinylchlorid und Acrylonitril, und
(b) von etwa 0,01 Teilen bis 1,0 Teile eines Vernetzungsmittels, ausgewählt aus der Gruppe, bestehend aus Benzophenon, Anthrachinon. 1,6-Hexandioldiacrylat und 2,4-Bis(trichlormethyl)-6-p-methoxyphenyl-*sym.*-triazin und 2,4-Bis(trichlormethyl)-6-(3,5-dimethoxyphenyl)-*sym*.-triazin.

7. Verbundstoff mit hoher Beständigkeit nach Anspruch 6, bei welchem die Schaumstoffmembran eine zelluläre Struktur mit mindestens 10 Volumenprozent Poren aufweist.

8. Verbundstoff mit hoher Beständigkeit nach einem der vorgenannten Ansprüche, bei welchem die Polyurethanfolie mindestens 250 Mikrometer dick ist.

9. Verbundstoff mit hoher Beständigkeit nach einem der vorgenannten Ansprüche, welcher ferner von 10 % bis 75 Volumenprozent Mikrokügelchen aufweist, ausgewählt aus der Gruppe, bestehend aus Glasmikrokügelchen und hohlen Polymer-Mikrokügelchen sowie deren Mischungen.

10. Verbundstoff mit hoher Beständigkeit nach einem der vorgenannten Ansprüche, bei welchem die Acrylat-Haftklebstoffzusammensetzung ferner von 2 bis 15 Teile eines hydrophoben Silicas mit einer Oberfläche von mindestens etwa 10 m²/g aufweist.

11. Verbundstoff mit hoher Beständigkeit nach einem der vorgenannten Ansprüche, welcher ferner flexible Mittel zur Befestigung der Schaumstoffmembran und der Schicht der abriebfesten thermoplastischen Polyurethanfolie aufweist, welches Mittel die Energiedissipation des Verbundstoffs nicht wesentlich beeinträchtigt.

12. Verbundstoff mit hoher Beständigkeit nach einem der vorgenannten Ansprüche, bei welchem die Schicht der abriebfesten Polyurethanfolie eine Dicke von mindestens 300 Mikrometer aufweist.

13. Verwendung eines Verbundstoffe mit hoher Beständigkeit nach einem der vorgenannten Ansprüche, um Schutz gegen Schlag und Abriebschaden zu gewähren.

14. Schweller für Automobile mit einem daran befestigten Verbundstoff mit hoher Beständigkeit nach Anspruch 1 bis 12.

## Revendications

1. Matériau composite à haute intégrité comprenant :
(a) une membrane en mousse comprenant une composition adhésive sensible à la pression acrylique et ayant un module de conservation à la compression (E') à -30°C d'au moins 3MPa et un module de perte à la compression (E'') à -30°C d'au moins 5MPa sur une gamme de fréquences d'environ 1 x 10² rad/sec à environ 3 x 10⁴ rad/sec, et
(b) une couche pelliculaire résistante à l'abrasion de polyuréthanne thermoplastique, ledit matériau composite ayant une résistance au choc supérieure à celle de la membrane ou de la pellicule prise isolément.

2. Matériau composite à haute intégrité suivant la revendication 1, dans lequel la couche pelliculaire résistante à l'abrasion de polyuréthanne thermoplastique a une dureté Shore A de 60 à 95, ladite couche pelliculaire ayant une épaisseur d'au moins 150 micromètres.

3. Matériau composite à haute intégrité suivant l'une ou l'autre des revendications 1 et 2, dans lequel la membrane en mousse a un module de conservation à la compression (E') à -30°C d'au moins environ 30 MPa et un module de perte à la compression (E'') à -30°C d'au moins 10 MPa sur une gamme de fréquences d'environ 1 x 10⁻¹ rad/sec à environ 3 x 10⁴ rad/sec.

4. Matériau composite à haute intégrité suivant l'une quelconque des revendications précédentes, dans lequel la composition adhésive sensible à la pression comprend :
(a) un polymère de 50-100 parties de monomère d'acrylate ou de méthacrylate substitué ou non substitué et proportionnellement 50-0 parties d'un monomère copolymérisable polaire, et
(b) un agent de réticulation.

5. Matériau composite à haute intégrité suivant l'une quelconque des revendications 1 à 3, dans lequel la composition adhésive sensible à la pression à base d'acrylate comprend :
(a) de 90 parties à 99 parties d'acrylate d'isooctyle et, proportionnellement, de 1 à 10 parties d'un monomère copolymérisable fortement polaire choisi dans le groupe comprenant l'acide acrylique, l'acide méthacrylique, l'acide itaconique, l'acrylamide et le méthacrylamide, et
(b) environ 0,01 partie à environ 1,0 partie d'un agent de réticulation choisi dans le groupe comprenant les dérivés carbonylés extracteurs d'hydrogène, les acrylates multifonctionnels et les triazines à substitution de chromophore.

6. Matériau composite à haute intégrité suivant l'une quelconque des revendications 1 à 3, dans lequel la composition adhésive sensible à la pression à base d'acrylate comprend :
(a) un polymère de 70-100 parties de monomère d'acrylate substitué ou non substitué et proportionnellement 30-0 parties d'un monomère copolymérisable modérément polaire choisi dans le groupe comprenant la N-vinylpyrrolidone, le N-vinylcaprolactame, le chlorure de vinyle et l'acrylonitrile, et
(b) environ 0,001 partie à environ 1 partie d'un agent de réticulation choisi dans le groupe comprenant la benzophénone, l'anthraquinone, le diacrylate de 1,6-hexanediol, la 2,4-bis(trichlorométhyl)-6-p-méthoxyphényl-s-triazine et la 2,4-bis(trichlorométhyl)-6-(3,5-diméthoxyphényl)-s-triazine.

7. Matériau composite à haute intégrité suivant la revendication 6, dans lequel la membrane en mousse a une structure cellulaire comprenant au moins 10 % de vides sur une base volumique.

8. Matériau composite à haute intégrité suivant l'une quelconque des revendications précédentes, dans lequel la pellicule de polyuréthanne a une épaisseur d'au moins 250 micromètres.

9. Matériau composite à haute intégrité suivant l'une quelconque des revendications précédentes, comprenant en outre de 10 % à 75 % en volume de microsphères choisies dans le groupe comprenant les microsphères de verre, les microsphères polymériques creuses et leurs mélanges.

10. matériau composite à haute intégrité suivant l'une quelconque des revendications précédentes, dans lequel la composition adhésive sensible à la pression à base d'acrylate comprend en outre de 2 à 15 parties d'une silice hydrophobe ayant une aire superficielle d'au moins environ 10 m²/g.

11. Matériau composite à haute intégrité suivant l'une quelconque des revendications précédentes, comprenant en outre un moyen flexible pour fixer la membrane en mousse et la couche pelliculaire résistante à l'abrasion de polyuréthanne thermoplastique, ce moyen ne modifiant pratiquement pas la dissipation d'énergie du matériau composite.

12. Matériau composite à haute intégrité suivant l'une quelconque des revendications précédentes, dans lequel la couche pelliculaire résistante à l'abrasion de polyuréthanne a une épaisseur d'au moins 300 micromètres.

13. Utilisation d'un matériau composite à haute intégrité suivant l'une quelconque des revendications précédentes, pour réaliser une protection contre toute détérioration au choc et à l'abrasion.

14. Plaque de protection de la caisse d'un véhicule automobile comprenant un matériau composite à haute intégrité suivant l'une quelconque des revendications 1 à 12, attaché à ladite plaque.
